# EUROPÄISCHE PATENTANMELDUNG

(11) **EP 2 116 665 A2**
(43) Veröffentlichungstag der Anmeldung: **11.11.2009**
(21) Anmeldenummer: 09004080.9
(22) Anmeldetag: 21.03.2009
(51) Int. Cl.: E04D 15/06, E04D 15/04

(54) **Schweissgerät zum Verbinden eines flexiblen Bandes mit einer Materialbahn**

(30) Priorität: 06.05.2008 DE 202008006181 U
(71) Anmelder: Leister Process Technologies, 6056 Kägiswil (CH)
(72) Erfinder: Gisler, Lukas, 6055 Alpnach (CH); Niederberger, Adolf, 6056 Kägiswil (CH)
(74) Vertreter: Klocke, Peter

(57) **Zusammenfassung**

Die Erfindung betrifft ein Bandschweißgerät (1) zum Verbinden eines flexiblen, vorzugsweise materialgleichen Bandes (2) mit mindestens einer flächigen Materialbahn, wobei das Band (2) die Materialbahn in einem Deckungsbereich verstärkt. Das Bandschweißgerät (1) weist ein von Laufrollen (3) getragenes Fahrgestell (5), eine Heizeinrichtung (6) zum lokalen Erhitzen der mindestens eine Materialbahn und/oder des Bandes (2) und mindestens eine an dem Fahrgestell (5) angeordnete drehbare Anpressrolle (4) zum punktuellen Anpressen des Bandes (2) an die Materialbahn auf. Das Band (2) wird von einer von dem Fahrgestell (5) getragenen Bandrolle (9) abgewickelt. Zur Vereinfachung des Handlings des Bandschweißgerätes (1) ist in Schweißrichtung nach der Anpressrolle (4) eine Haltevorrichtung (14) für das Band (2) an dem Fahrgestell (5) angeordnet, an der das freie Ende (15) des Bandes (2) vor bzw. nach einem Schweißvorgang für die Neupositionierung des Bandschweißgerätes (1) lösbar befestigbar ist. Die Haltevorrichtung (14) hält das Band (2) während des Transportes des Bandschweißgerätes (1) an der Anpressrolle (4) in Anlage.

## Beschreibung

Die Erfindung betrifft ein Bandschweißgerät zum Verbinden eines flexiblen, vorzugsweise materialgleichen Bandes mit mindestens einer flächigen Materialbahn, wobei das Band die Materialbahn in einem Überdeckungsbereich verstärkt, mit einem von Laufrollen getragenen Fahrgestell, mit einer Heizeinrichtung zum lokalen Erhitzen der mindestens einen Materialbahn und/oder des Bandes, und mit mindestens einer am Fahrgestell angeordneten drehbaren Anpressrolle zum punktuellen Anpressen des Bandes an die Materialbahn, wobei das Band von einer von dem Fahrgestell getragenen Bandrolle abgewickelt wird. Mit dem erfindungsgemäßen Bandschweißgerät können beispielsweise im Wesentlichen überlappungsfrei nebeneinander verlegte Dichtungsbahnen mittels einem Dichtungsband verbunden oder eine Dichtungsbahn bzw. eine Kunststoffplane an bestimmten Stellen mittels dem Band verstärkt werden.

Flachdächer werden in der Regel mit Isoliermaterial und Dichtungsbahnen eingedeckt. Dazu werden die Dichtungsbahnen, beispielsweise Bitumen- oder Kunststoffbahnen, entweder mit seitlich überlappenden Rändern oder überlappungsfrei mit stumpf aneinanderstoßenden Rändern nebeneinander verlegt. Nach dem fachgerechten Verlegen werden die Ränder der Dichtungsbahnen dichtend miteinander verbunden. Dabei werden bei überlappend verlegten Bahnen die Randbereiche auf einander gegenüber liegenden Seiten lokal bis zur Plastifizierung erhitzt und anschließend plastifiziert zusammengepresst. Bei nicht überlappend angeordneten Bahnen werden die Randbereiche dagegen mittels einem den Stoß überdeckenden Dichtungsband entsprechend miteinander verschweißt.

Bandschweißgeräte zum Verbinden von überlappungsfrei nebeneinander verlegten elastischen Dichtungsbahnen sind allgemein bekannt. Sie weisen meist ein von Laufrollen getragenes vorzugsweise selbstfahrendes Fahrgestell auf, an dem eine Heizeinrichtung zum lokalen Erhitzen des Dichtungsbandes und der Randbereiche der Dichtungsbahnen auf einander zugeordneten Seiten sowie eine Bandrolle von der das Dichtungsband abläuft befestigt ist. Das Zusammenpressen des Dichtungsbandes mit den Dichtungsbahnen nach dem Plastifizieren erfolgt dabei üblicherweise mit einer an dem Fahrgestell angeordneten Anpressrolle, die das Fahrgestell zusammen mit den Laufrollen trägt. Das Fahrgestell belastet die Anpressrolle mit einem Hauptanteil des Gewichtes des Schweißgerätes um einen hohen Anpressdruck für eine gute Schweißqualität sicher zustellen.

Bei bekannten Bandschweißgeräten wird das Dichtungsband von der Bandrolle direkt oder über eine bzw. mehrere Umlenkvorrichtungen in Form von Rollen unter die Anpressrolle geführt, wo die Verschweißung stattfindet. Das Dichtungsband wird nach der Verschweißung zweier Dichtungsbahnen miteinander abgeschnitten. Um eine solche Maschine an eine neue Schweißstelle zu verschieben, kippt man das Bandschweißgerät auf die in Schweißrichtung vorderen Laufrollen und hebt damit die in Schweißrichtung dahinter angeordnete Anpressrolle von den Dichtungsbahnen ab. Das Dichtungsband hängt dann von den zwischen der Bandrolle und der Anpressrolle befindlichen Umlenkeinrichtungen lose herunter und ist nicht mehr unter der Anpressrolle positioniert. Beim Abstellen des Bandschweißgerätes an einer neuen Schweißstelle muss das Dichtungsband zuerst wieder unter die Anpressrolle gelegt werden, was für den Anwender mühsam ist.

Der Erfindung liegt daher die Aufgabe zugrunde, ein Bandschweißgerät vorzuschlagen, bei dem das erneute Positionieren des flexiblen Bandes unter der Anpressrolle nach dem Bewegen zu einer neuen Schweißstelle entfällt.

Diese Aufgabe wird erfindungsgemäß durch ein Bandschweißgerät mit den Merkmalen des Anspruchs 1 gelöst. Weitere vorteilhafte Ausgestaltungen sind den rückbezogenen Unteransprüchen zu entnehmen.

Danach weist das erfindungsgemäße Bandschweißgerät in Schweißrichtung nach der Anpressrolle eine Haltevorrichtung für das flexible Band auf, an der das freie Ende des Bandes vor bzw. nach einem Schweißvorgang lösbar festlegbar ist. Die Haltevorrichtung dient dazu, das Band an der Anpressrolle während des Transportes des Bandschweißgerätes in Anlage zu halten. Das Band kann mit der Haltevorrichtung von Hand verbunden werden, wenn das Band hinter dem Bandschweißgerät nach einem Schweißvorgang abgeschnitten oder wenn eine neue Bandrolle vor einem Schweißvorgang notwendig ist. Die Bandhaltevorrichtung hält das Band unter der Anpressrolle in Position, auch wenn das Bandschweißgerät abgekippt wird und sich die Anpressrolle nicht mehr auf einer Unterlage befindet. Wird das Bandschweißgerät an einer Schweißposition abgesetzt oder von einer Schweißposition zu einer anderen Schweißposition umgesetzt, so befindet sich das Band immer noch korrekt unterhalb der Anpressrolle und muss nicht neu positioniert werden. Dabei kann die Verbindung des Bandes mit der in Schweißrichtung nach der Anpressrolle angeordneten Haltevorrichtung so ausgeführt sein, dass das freie Bandende entweder manuell von der Haltevorrichtung gelöst werden muss oder sich von dieser selbstständig löst, sobald das Schweißgerät sich in Schweißrichtung vorwärts bewegt.

Bei einer vorteilhaften Variante der Erfindung ist das freie Ende des flexiblen Bandes lose mit der Haltevorrichtung verbindbar, und in Längsrichtung entlang der Haltevorrichtung bewegbar geführt. Dies ermöglicht, dass sich das Band mit der Vorwärtsbewegung des Bandschweißgerätes automatisch von der Haltevorrichtung löst, ohne den Schweißprozess zu behindern.

Dazu bestimmen die Anpressrolle und die Haltevorrichtung vorteilhafterweise Führungsstrecken für das flexible Band, die eine entgegengesetzte Krümmung aufweisen. Bedingt durch eine gewisse Biegesteifigkeit des Bandes und die geschwungene Führung des Bandes von der Bandrolle bis nach der Haltevorrichtung verändert sich die Position des flexiblen Bandes bezüglich der Anpressrolle beim Anheben oder beim Kippen des Bandschweißgerätes nicht oder nur unwesentlich, wenn die Anpressrolle das Band nicht mehr presst. Dabei bleibt das Band an einem Umfangsbereich der Anpressrolle in Anlage. Der Umfangsbereich wird von den Positionen der Bandrolle und der Haltevorrichtung für das Band sowie von gegebenenfalls zwischen der Bandrolle und der Anpressrolle vorgesehenen Umlenkvorrichtungen bestimmt.

In einer bevorzugten Ausführungsform des erfindungsgemäßen Bandschweißgerätes weist die Haltevorrichtung zum Umlenken des Bandes eine drehbare Umlenkrolle auf, an der das Band über einen Teil des Umfangs anliegt. Die Umfangsabschnitte der Anpressrolle und der Umlenkrolle, an denen das flexible Band anliegt, bilden die Führungsstrecken mit entgegengesetzter Krümmung für das Band. Sie führen das Band S-förmig, wobei das Band zwischen den kreisbogenförmigen Führungsabschnitten ansonsten gestreckt verläuft. Vorteilhafterweise ist bei einer Variante der Erfindung der Abstand der Umlenkrolle zu der Anpressrolle durch Verschieben der Umlenkrolle veränderbar Dies ermöglicht die Anpassung der Haltevorrichtung an die Dicke des zu verschweißenden Bandes.

Damit das Band, sobald es mit der Haltevorrichtung verbunden ist, an der Umlenkrolle in Anlage verbleibt, weist die Haltevorrichtung außerdem noch einen Gegenhalter für die Umlenkrolle auf, der das freie Ende des Bandes längsverschiebbar führt und in Richtung der Umlenkrolle vorspannt. Idealerweise ist der Abstand des Gegenhalters zu der Umlenkrolle variabel einstellbar, um die Haltevorrichtung an unterschiedliche Dicken des Bandes anpassen zu können.

Die Materialbahn, mit der das flexible Band verbunden wird, kann auch eine lose Plane, wie sie beispielsweise als Lkw-Plane bekannt ist. Mit dem Band kann die Plane an bestimmten kritischen Stellen verstärkt und damit die Haltbarkeit verbessert werden. Das Band verhindert das Einreißen der Plane an Stellen, wo beim Gebrauch hohe Kräfte angreifen können. Außerdem kann das Band mit einer speziell ausgebildeten Heizeinrichtung nur in seinen Randbereichen erwärmt und/oder mit einer besonders gestalteten Anpressrolle nur mit seinen Randbereichen an die Plane angepresst werden. Damit ist es möglich, das Band derart mit der Plane zu verschweißen, dass ein Kanal zwischen dem Band und der Plane gebildet wird. Der so geschaffene Kanal dient beispielsweise zum Einziehen eines Seiles, mit dem die Plane an dem Aufbau des Fahrzeugs zu befestigen ist. Eine weitere Anwendung ist das Aufbringen eines Drahtseiles auf der Plane um den Diebstahlschutz eines LKW-Ladedecks zu verbessern. Dazu wird das vorgängig auf der Plane ausgelegte Drahtseil mit dem Band des sich vorwärts bewegenden Schweißgerätes eingeschweißt. Alternativ kann das Drahtseil auch von einer zweiten Rolle, die neben der Bandrolle am Schweißgerät angeordnet ist, simultan zum Band abrollen.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale können für sich allein oder zu mehreren bei unterschiedlichen Ausführungsformen der Erfindung verwirklicht sein. Die Figuren der Zeichnung zeigen ein erfindungsgemäßes Bandschweißgerät in Seitenansicht, bei der das freie Ende des Bandes für den Transport mit der Haltevorrichtung verbunden ist. Es stellen dar:
- Figur 1: ein erfindungsgemäßes Bandschweißgerät in Schweißstellung;
- Figur 2: eine vergrößerte Darstellung der Haltevorrichtung aus Figur 1 mit und ohne daran befestigtem Band; und
- Figur 3: Das Bandschweißgerät aus Figur 1 in Transportstellung.

Das erfindungsgemäße Bandschweißgerät 1 dient zum Verschweißen eines flexiblen Bandes 2 mit mindestens einer in der Zeichnung nicht dargestellten Materialbahn. Das Band 2 kann beispielsweise ein Dichtungsband 2 sein, mit dem zwei nicht dargestellte Dichtungsbahnen, die auf einem ebenen Untergrund nebeneinander überlappungsfrei mit aneinander stoßenden Rändern verlegt sind, dichtend miteinander verbindbar sind. Das Dichtungsband 2 verstärkt die außerdem die Ränder der Dichtungsbahnen. Das Bandschweißgerät 1 weist ein von Laufrollen 3 und von einer Anpressrolle 4 getragenes Fahrgestell 5 auf, an dem eine Heizeinrichtung 6 zum lokalen Erhitzen des Dichtungsbandes 2 und von Rändern der Dichtungsbahnen angeordnet ist. Außer der Heizeinrichtung 6 trägt das Fahrgestell 5 noch ein Gehäuse 7, eine Rollenhalterung 8 mit einer Bandrolle 9, von der das Band 2 abspult und einen Führungsstab 10 zum Führen und zum Kippen des Fahrgestells 5. In dem Gehäuse 7 sind in der Zeichnung nicht sichtbar ein Antrieb für die als Antriebsrolle wirkende Anpressrolle 4 sowie Regel- und Steuerungseinrichtungen für den Antrieb und für die Heizeinrichtung 6 vorgesehen.

Das von der Bandrolle 9 ablaufende Dichtungsband 2 läuft über erste und zweite Umlenkwalzen 11, 12 als Umlenkvorrichtungen zu der Anpressrolle 4 und weiter zu einer Umlenkrolle 13 einer in Schweißrichtung nach der Anpassrolle 4 angeordneten Haltevorrichtung 14. Das Dichtungsband 2 ist an der Anpressrolle 4 sowie an der Umlenkrolle 13 über einen Teil des jeweiligen Umfangs mit umgekehrter Krümmung in Anlage. Das freie Ende 15 des Bandes 2 wird dabei von einem Gegenhalter 16 an der Umlenkrolle 13 in Anlage gehalten, so dass das Ende 15 beim Abheben der Anpressrolle 4 von den Dichtungsbahnen bzw. dem Untergrund, die in der Zeichnung nicht dargestellt sind, nicht von selbst aus der Haltevorrichtung 14, die das Dichtungsband 2 in Längsrichtung frei verschiebbar führt, herausrutscht. Der Abstand des Gegenhalters 16 zu der Umlenkrolle 13 ist entsprechend der Dicke des Dichtungsbandes 2 eingestellt und kann, wenn er federnd ausgebildet ist, das Band 2 auch leicht an die Rolle 13 anpressen.

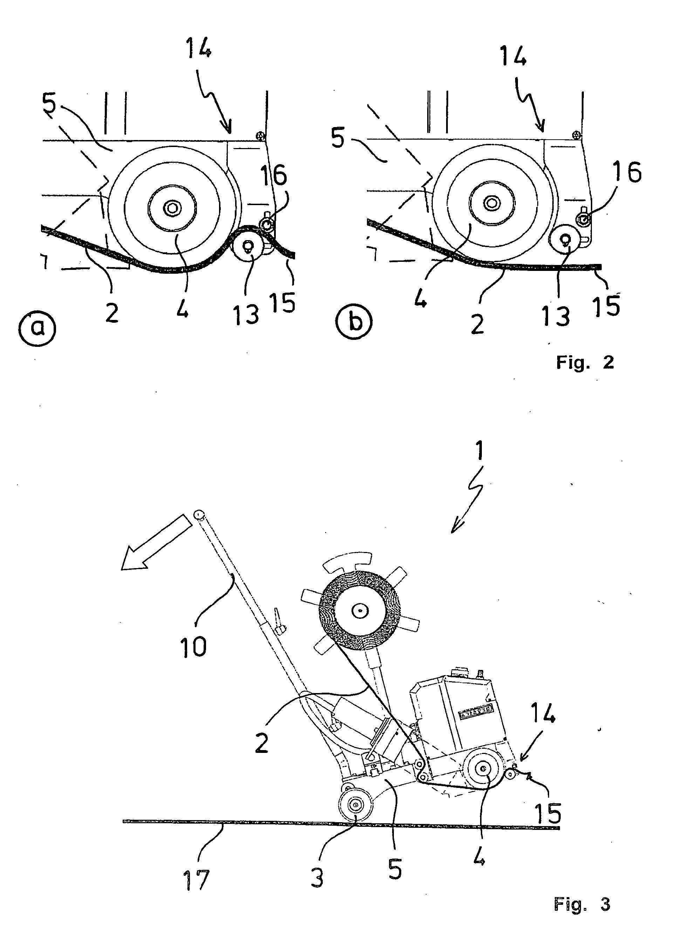

Figur 2 zeigt in den Figuren 2a, 2b eine Ausschnittsvergrößerung der Haltevorrichtung 14 des Bandschweißgerätes 1. In der Figur 2a ist das freie Ende 15 des Bandes 2 von der Haltevorrichtung 14 gehalten, in der Figur 2b von der Haltevorrichtung 14 gelöst. Das Lösen des Endes 15 erfolgt nach der Neupositionierung des Schweißgerätes 1 selbstständig, sobald das Bandschweißgerät 1 in Schweißrichtung vorwärts bewegt wird.

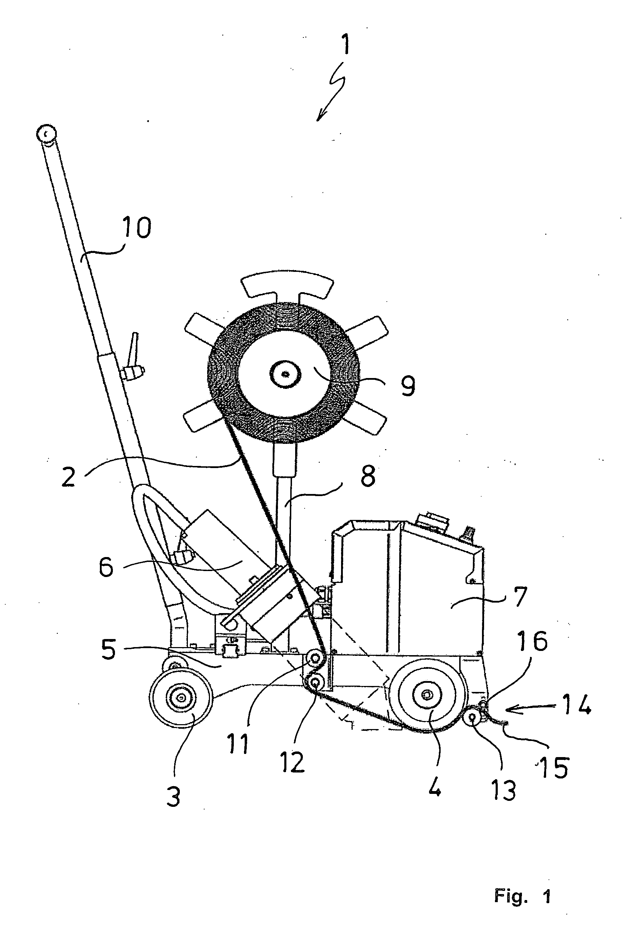

In Figur 3 ist das Bandschweißgerät 1 in einer Transportstellung dargestellt. Das Fahrgestell 5 ist gegenüber der in Figur 1 gezeigten Stellung durch Schwenken des Schweißgerätes 1 mittels dem Führungsstab 10 nach oben gekippt. Es wird allein von den Laufrollen 3 getragen. Die Anpressrolle 4 ist von dem Untergrund 17 abgehoben. Dabei ist das Band 2 an der Haltevorrichtung 14 eingelegt und wird von dieser an der Anpressrolle 4 in Anlage gehalten.

## Patentansprüche

1. Bandschweißgerät (1) zum Verbinden eines flexiblen, vorzugsweise materialgleichen Bandes (2) mit mindestens einer flächigen Materialbahn, wobei das Band (2) die Materialbahn in einem Überdeckungsbereich verstärkt, mit einem von Laufrollen (3) getragenen Fahrgestell (5), mit einer Heizeinrichtung (6) zum lokalen Erhitzen der mindestens einen Materialbahn und/oder des Bandes (2) und mit mindestens einer an dem Fahrgestell (5) angeordneten drehbaren Anpressrolle (4) zum punktuellen Anpressen des Bandes (2) an die Materialbahn, wobei das Band (2) von einer von dem Fahrgestell (5) getragenen Bandrolle (9) abgewickelt wird, **dadurch gekennzeichnet, dass** in Schweißrichtung nach der Anpressrolle (4) eine Haltevorrichtung (14) für das Band (2) angeordnet ist, an der das freie Ende (15) des Bandes (2) vor bzw. nach einem Schweißvorgang für die Neupositionierung des Bandschweißgerätes (2) lösbar festlegbar ist, um das Band (2) an der Anpressrolle (4) während des Transportes des Bandschweißgerätes in Anlage zu halten.

2. Bandschweißgerät nach Anspruch 1, **dadurch gekennzeichnet, dass** das freie Ende (15) des Bandes (2) lose mit der Haltevorrichtung (14) verbunden und in Längsrichtung entlang der Haltevorrichtung (14) bewegbar geführt ist.

3. Bandschweißgerät nach Anspruch 1 oder 2, **dadurch gekennzeichnet, dass** die Anpressrolle (4) und die Haltevorrichtung (14) Führungsstrecken für das Band (2) mit entgegengesetzter Krümmung bestimmen.

4. Bandschweißgerät nach einem der vorangegangenen Ansprüche, **dadurch gekennzeichnet, dass** die Haltevorrichtung (14) zum Umlenken des Bandes (2) eine drehbare Umlenkrolle (13) aufweist.

5. Bandschweißgerät nach Anspruch 4, **dadurch gekennzeichnet, dass** der Abstand der Umlenkrolle (13) zu der Anpressrolle (4) durch Verschieben der Umlenkrolle (13) veränderbar ist.

6. Bandschweißgerät nach Anspruch 4 oder 5, **dadurch gekennzeichnet, dass** die Haltevorrichtung (14) einen Gegenhalter (16) für die Umlenkrolle (13) aufweist, der das freie Ende (15) des Bandes (2) längs verschiebbar an der Umlenkrolle (13) in Anlage hält.

7. Bandschweißgerät nach Anspruch 6, **dadurch gekennzeichnet, dass** der Abstand des Gegenhalters (16) zu der Umlenkrolle (13) variabel einstellbar ist.
